# EUROPEAN PATENT SPECIFICATION

(11) **EP 1 472 833 B1**
(45) Date of publication and mention of the grant of the patent: **21.03.2007**
(21) Application number: 02806360.0
(22) Date of filing: 12.12.2002
(51) Int. Cl.: H04L 12/56, H04L 29/06

(54) **SYSTEM FOR TRANSFERRING AND FILTERING VIDEO CONTENT DATA**
SYSTEM ZUR ÜBERTRAGUNG UND FILTERUNG VON VIDEO DATEN
SYSTEME DE TRANSFERT ET DE FILTRAGE DE DONNEES DE CONTENU VIDEO

(30) Priority: 18.01.2002 EP 02250350
(43) Date of publication of application: 03.11.2004
(73) Proprietor: Koninklijke Philips Electronics N.V., 5621 BA Eindhoven (NL)
(72) Inventor: YULE, David, C., NL-5656 AA Eindhoven (NL); BELL, David, A., NL-5656 AA Eindhoven (NL)
(74) Representative: Groenendaal, Antonius W. M.
(86) International application number: PCT/IB2002/005501
(87) International publication number: WO 2003/061216

(56) References cited:
- WO-A-01/65833
- US-A- 5 884 033
- DAKSS J ET AL: "HYPERLINKED VIDEO" PROCEEDINGS OF THE SPIE, SPIE, BELLINGHAM, VA, US, vol. 3528, November 1999 (1999-11), pages 2-10, XP000986761

## Description

The invention relates to a method of transferring content data, in particular video, in which a sender provides the content data, the sender generates a transmission signal representing the content data, the transmission signal is transferred to a receiver via a transmission channel, a receiver receives the transmission signal and retrieves the content data, and the receiver renders the content data.

The invention further relates to a device for sending content data, in particular video, which device comprises input means for providing the content data, and means for generating a transmission signal representing the content data.

The invention further relates to a device for receiving content data, in particular video, which device comprises means for receiving a transmission signal, means for retrieving the content data from the transmission signal, and means for rendering the content data.

The invention further relates to a signal and to a record carrier on which the signal is recorded.

Such methods, such devices, and such a signal are known from US 5,557,320. The document relates to a method of transferring content data in the form of a transmission signal from a sender to a receiver via a transmission channel in a sender-subscriber based, transmission traffic control system for video mail. The electronic data is transmitted primarily in the form of still or motion picture images, with or without audio track. A delivery network system provider offers a service in which the network has control over the actual time of video mail transmission. The path, bandwidth allocation, protocol format etc. can be set at the discretion of the network provider, and also compression/decompression or encryption processors can be provided. However for the user there is no flexibility for controlling the transmission of such content data.

Therefore it is an object of the invention to provide more flexible means for transferring content data. According to a first aspect of the invention this object is achieved with a method as in the opening paragraph, characterized in that the sender provides a filter for adapting the content data, the sender generates a filter signal representing the filter, the filter signal is transferred to a receiver via the transmission channel, the receiver receives the filter transmission signal and retrieves the filter, and the receiver processes the content data by the filter.

According to a second aspect of the invention this object is achieved with a sending device as in the opening paragraph, characterized in that the device comprises filter input means for providing a filter for adapting the content data, and means for generating a filter signal representing the filter.

According to a third aspect of the invention this object is achieved with a filter signal representing content data and a filter to be used in the first method, characterized in that the filter is for setting a remote processing unit for filtering the content data, in particular video.

According to a fourth aspect of the invention this object is achieved with a rendering device as in the opening paragraph, characterized in that the device comprises means for receiving a filter signal representing a filter, and processing means for processing the content data as set by the filter.

The invention is based on the following recognition. Devices, e.g. mobile phones, are becoming multimedia terminals which can send and receive video as well as audio and text messages. This invention addresses how somebody could edit and adapt a video clip they were sending to friends by attaching a pre-defined 'filter' which adds suitable effects to the clip (e.g. color adaptation, overlaying of icons, fade between en scenes, etc.). For example, if sending a video message back from a romantic holiday to your friends, you may like to edit the clip to give a more romantic atmosphere (music in the background, 'rose-tinted' filter, gentle fade in & out of video). However, if sending a message from an 'adventure holiday', you might like to adapt the clip with a lively filter (like an MTV music video). Instead of using the filter to edit the video clip before transmission, the filter is transmitted with the video, so allowing the receivers to view the clip with or without the filter, or use their own filters.

According to a fifth aspect of the invention this object is achieved with a method of providing a filter to be used in the first method, characterized in that the filter is for setting a processing unit for filtering content data, in particular video, in which method a number of filters is made available for selection, a client request is received indicative of a selection of a filter, a filter signal is generated representing the filter, and the filter signal is transferred to the client via a transmission channel.

The effect is that a suitable filter can be selected and filters can be downloaded onto a sender or a receiver, without the filter itself being actually transferred between sender and receiver.

Further preferred embodiments of the method, devices and signal according to the invention are given in the further claims.

These and other aspects of the invention will be apparent from and elucidated further with reference to the embodiments described by way of example in the following description and with reference to the accompanying drawings, in which
Fig. 1 shows a sender and receiver,
Fig. 2 shows a sender, receiver and filter provider,
Fig. 3 shows video processing,
Fig. 4 shows a record carrier, and
Fig. 5 shows a filter.

In the Figures, elements which correspond to elements already described have the same reference numerals.

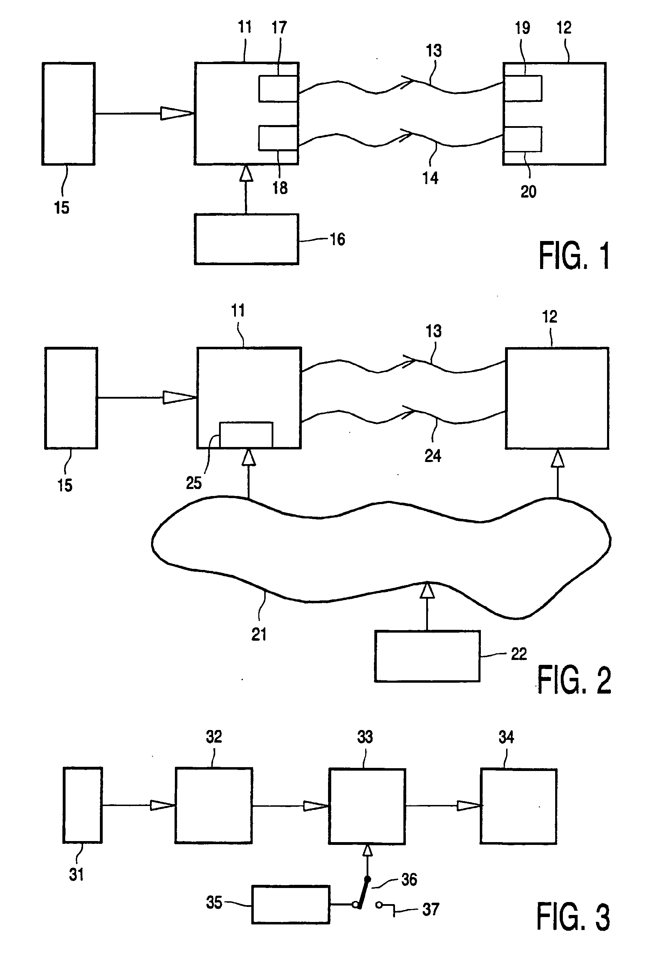

Fig. 1 shows a sender and receiver. The sender 11 has a content input unit 15 for providing content data. The content data may for example be a video clip or a still image, retrieved from an external source or created within the sender by a camera module. The format of the input video can be any suitable, preferably standard, encoding (e.g. MPEG video). Further the content data may include text or audio, provided internally or from an external source under the control of the user at the sending side. The sender is provided with a filter input unit 16 for defining a filter to be used for adapting the content data to the liking of the user. The sender further comprises a content signal unit 17 for generating a transmission signal 13 representing the content data, and a filter signal unit 18 for generating a filter signal representing the filter as selected by the user for sending. In an embodiment the device has a filter creation unit for defining a specific filter by input provided by the user, whereby the user can define the parameters of the filter. The content data is encoded to a transmission signal 13 by the content signal unit 17 and the filter data is encoded to a filter signal 14 by the filter signal unit 18. The signals are transferred to a receiver 12 via a transmission channel, e.g. a mobile phone network or internet, or a record carrier like a CD-R. The receiver 12 has a receiving signal unit 19 for receiving the transmission signal 13, and a filter input unit 20for receiving the filter signal 14. The receiver 12 further comprises a processing unit for performing the filter operation as defined by the filter signal as described below with reference to Figure 3. The content data is filtered and can be rendered, e.g. on a video display, or can be provided to an output. The filter as transferred by the filter signal 14 can be provided with a range of effects, for example as follows.

Colour filters: Alters the colour of each frame in a consistent manner, e.g.:
- Changes the whole clip to black and white
- Creates a graded rose-tinted filter (top of image very red, bottom of screen normal colour)
- Fades certain colours in and out in different frames.

Image filters: Alters the structure of each frame, e.g.:
- Blurs edges.
- 'Heat haze' effect, which wobbles parts of the image from side to side as the frames progress.
- 'Hall of mirrors' effects - stretch some parts of image, shrink others.

Overlay video/images. The operation is to draw icons on top of the video, or to have animated images moving across the screen, scrolling text at the bottom of the video, etc.

Scene fades. Fade from one scene to another.

The scene fade filter would require automatic scene change detection, and this implies that the filter must be of the 'non-streaming' type.

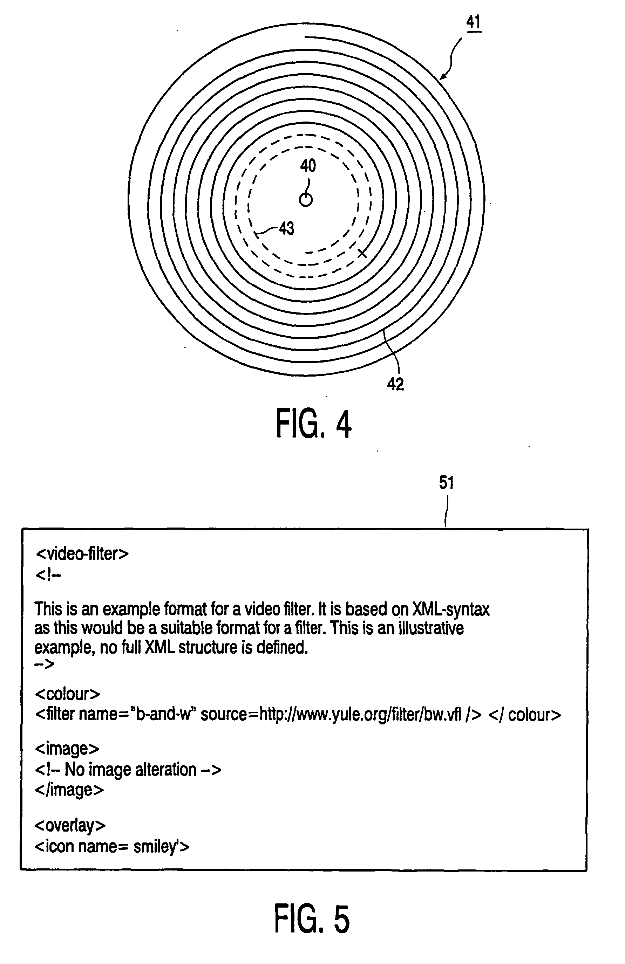

For adapting audio or replacing an audio track the filter may contain audio filter operations, for example 'Add audio track' to add background music to the video clip. The format of the filter input file can be selected. An example format is given in the embodiment described with Figure 5 below. The filter operation is performed by a processing unit, which is set to the type of filtering as prescribed by the filter. The processing unit may take encoded video data as it is available from the content data input. In an embodiment the filter works on the decoded video, so it is not dependent on the video encoding format. In this way the filter processing can be used for different types of video data. There are many well-understood methods for filtering video to adapt the content (e.g. color/ contrast/ brightness as well as transitions between shots).

Fig. 2 shows a sender, receiver and filter provider. In addition to the system described with reference to Figure 1, the sender 11 now has a filter input unit for retrieving a filter from an external filter provider 22 via a network 21, e.g. the internet. Also the receiver has a filter input unit 25 for retrieving a filter from an external filter provider 22 via a network 21. The sender may select one of the candidate filters available at the provider and download the filter to his device. The filter may then be transferred to the receiver via the filter signal 24. Alternatively the sender my include just a reference to the filter in the filter signal 24, and the receiver then can retrieve the filter itself from the provider 22 or from a different external source. In an embodiment the receiver has a local storage for filter data for storing filters to be used more often. Now the filter indicated by reference may already be available in the receiver storage. Mobile phones currently allow some minor features to be downloaded over the network (often at a cost), e.g. new ringtones. Also downloading screensavers or applications (e.g. java applets) is well understood, e.g. for a PC or a Personal Digital Assistants PDA which can run a virtual machine. The downloading of a filter can be done using similar transmission techniques.

Fig. 3 shows video processing. The video input is received as an encoded video signal in the video input unit 31 and transferred to a decoder 32. After decoding the decoded video is transferred to a processing unit 33. The processing unit is set to perform filter operations by a filter from a filter input unit 35, e.g. a filter input file received from an external source. The video after filtering is transferred to an output unit 34. In an embodiment the output unit includes a display for rendering the processed video. In a further embodiment the device has a selector 36 for selecting a video output signal after filtering or a video signal without filtering. A further selector may be included for using a user filter locally provided from a memory 37 in the device. It is noted that the video filter contains a general set of rules which can adapt any video clip with a suitable style. The filter is independent of any particular video clip. In particular the filter processing is applied to the decoded video, and is not dependent on the type of encoding. However, in a different embodiment the processing unit may be connected to the encoded video, and the filter may be applied to the encoded video. For the filter two main variants of processing can be used: streaming or non-streaming. In the streaming model, the filter engine adapts each video frame, and then outputs it before receiving the next frame. In other words, it does not require any information about future frames of video to perform the filtering process; this has the advantage that it adds minimal delay to the video display process. In the Non-Streaming model, the filtering process for a particular frame is dependent on future frames in the video stream. A simple example of this case would be where the filter engine receives the whole decoded video clip, processes this (e.g. to find out where scene changes occur), and then outputs the filtered video clip. This allows more flexibility in the processing, but implies a delay in viewing the video.

In an embodiment the video input unit 35 is able to provide a filter from an external source. The external source may be a record carrier to be read by a reading unit, e.g. a CD reader. Alternatively video filters could be downloaded by many different means to a device, e.g. a mobile handset. The invention assumes that the mobile device has the ability to connect to a network using standard (internet-based) technology. If this is the case, each video filter could be stored on the network with its own URL (Universal Resource Locator) the handset would then request this URL for download. The handset would be able to identify the downloaded file as a 'video filter file' as these files would be assigned their own unique data type identifying them as video filters (e.g. if the download is via HTTP, the MIME-type is transmitted automatically with the data). It is noted that the video input unit 31 and the filter input unit 35 may be configured to receive a combined video & filter message from a sender. Transmission of data messages between two mobile devices is well understood (e.g. text messages like SMS). Further the email transmission between a sender and a receiver is well known, and could also be arranged between 2 internet-enabled mobile phones. For a combined video & filter message to be transmitted, it would be necessary to transmit the two components of the message together, along with their respective data types. For example, if using email as the underlying transport protocol, the message could be transmitted as a multipart MIME message; the receiving device would then receive the video and the filter at the same time, and display the filtered video accordingly. In an embodiment the sender and receiver can access data via URLs on the network by the well known HTTP protocol, e.g. using a browser, and receive & transmit email messages, e.g. via POP3/SMTP, and decode and display MPEG4 video. For example 2 WAP-enabled mobile phones (Wireless Access Protocol) can access data using the WTP protocol. Further the sender may include a video content generator, e.g. a camera for capture and an encoder for encoding video as MPEG4. Assuming this, the invention could be implemented using the following steps. Filters are downloaded via a browser over HTTP. They have a well-defined MIME-type (e.g. *'text-video-filter').* The filter file format is XML-based; an example filter is shown below. On download, the filter is stored in the mobile phone memory. When transmitting the combined video & filter, the message is sent as a multipart-MIME email message (containing MPEG4 clip & *'text-video-filter'* filter). Using these concepts, the development of a filter would then only be dependent on how the software for creating and displaying the video message is defined, and how the 'filter engine' is defined.

Fig. 4 shows a record carrier 41 provided with a track 42 intended for recording and a central hole 40. The track 42 is arranged in accordance with a spiral pattern of windings. A first part of the track in the middle area of the record carrier constitutes a Lead-In 43 for accommodating control data. The record carrier comprises a transparent substrate with a recording layer and a protective layer. The recording layer may be optically writable, for example via phase change, or magneto-optically writable by a device for writing information such as the known CD-Rewritable or CD-Recordable. The recording layer may also be provided with information via a production process, in which first a master disc is made which is subsequently multiplied through pressing. The information is organized in information blocks and is represented by optically readable marks in the form of a succession of areas reflecting much radiation and little radiation such as, for example a succession of pits of different lengths in a CD. The information blocks comprise a filter signal representing the filter data structure and parameters as described above. An embodiment of the record carrier comprises a large collection of filters, so that the user may select a suitable filter. In an embodiment the record carrier comprises video processing software for programming a standard processing unit, e.g. a PC, for performing the video encoding or decoding and filter processing.

Fig. 5 shows a filter. The filter 51 is defined in the XML type language (eXtended Markup Language). The first instruction indicates a colour filter, which is to be retrieved from an external source; in this case an internet URL is indicated. This part of the filter will change the colour to black and white. The next section may contain image operations, but non are included in this example. The last section contains an overlay operation, in this case an icon named smiley is to be overlaid by the processing unit.

Although the invention has been explained by embodiments using mobile handsets, any rendering device or other suitable device may be used. Also for the record carrier an optical disc has been described, but other media, such as a magnetic disc or tape, may be used. It is noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' may be represented by the same item of hardware.

## Claims

1. Method of transferring content data, including video, in which
a sender (11) provides the content data,
the sender generates a transmission signal (13) representing the content data,
the transmission signal is transferred to a receiver (12) via a transmission channel,
the receiver receives the transmission signal and retrieves the content data, and
the receiver renders the content data,
**characterized in that**
the sender (11) generates a filter signal (14) representing a filter for adapting the video, the filter being independent of the video;
the sender transfers the filter signal (14) to the receiver (12) via the transmission channel,
the receiver (12) receives the filter signal (14) representing the filter,
the receiver (12) selecting whether the content data has to be rendered with or without being processed by the filter;and
the receiver optionally performs a filter operation on the content data as defined by the filter signal (14) and renders the content data or the filtered content data.

2. Method as claimed in claim 1, wherein the sender selects the filter from a number of candidate filters available at a provider.

3. A sending device for sending content data, including video, to a receiving device; the sending device comprises input means (15) for providing the content data, and
means (17) for generating a transmission signal to the receiving device representing the content data,
**characterized in that** the sending device comprises
means (18) for generating a filter signal (14) representing a filter for adapting the content data filter signal representing the filter, where the filter is independent of the video, and for transferring the filter signal (14) to the receiving device (12) enabling the receiving device to perform a filter operation on the content data as defined by the filter signal (14), the receiving device comprising a selector (36) for rendering the content data with or without being processed by the filter.

4. Sending device as claimed in claim 3, wherein the sending device comprises filter input means (25) for retrieving a filter from an external source, in particular via a network or from a storage medium.

5. Sending device as claimed in claim 3, wherein the sending device comprises means for transmitting the transmission signal and the filter signal as a combined message.

6. Filter signal representing a filter for use in the method of claim 1, the filter signal (51) being for setting a filtering operation in a remote processing unit for optionally filtering the content data, including video, and the filter being independent of the video.

7. Filter signal as claimed in claim 6, wherein the filter signal (51) comprises parameters for filtering streaming video, in which the filtering operation is only dependent on frames of the video up to a frame to be displayed next.

8. Filter signal as claimed in claim 6, wherein the filter signal (51) comprises parameters for filtering non-streaming video, in which the filtering process is dependent on multiple frames in the video including frames to be displayed beyond the next frame.

9. Filter signal as claimed in claim 6, wherein the filter signal (51) comprises a color filter, and/or image structure filter, and/or an overlay filter, and/or a scene fade filter.

10. Filter signal as claimed in claim 6, wherein the content data also includes audio data and the filter signal (51) comprises an audio filter and/or additional audio.

11. Record carrier (41) on which a filter signal as claimed in claim 6, 7, 8, 9, or 10 is provided in a track (42) in which information patterns represent the filter signal, the filter being for optionally setting a remote processing unit for filtering content data, including video, and the filter being independent of the video.

12. Record carrier as claimed in claim 11, wherein the record carrier comprises a computer program product for processing content information according to the filter signal.

13. Device for receiving content data, including video, which device comprises means for receiving a transmission signal,
means for retrieving the content data from the transmission signal, and
means for rendering the content data,
**characterized in that**
the device comprises means (20) for receiving a filter signal representing a filter for adapting the content data, the filter being independent of the video, and
processing means (33) for performing a filter operation on the content data as defined by the filter signal (14);
rendering means (34) for rendering said processed content data; and
a selector (36) for rendering the content data with or without being processed by the filter.

14. Device as claimed in claim 13, wherein the device comprises filter input means (35) for retrieving filter data from an external source, in particular via a network or from a storage medium, as indicated by a reference in the filter signal.

## Patentansprüche

1. Verfahren zum Übertragen von Inhaltsdaten, einschließlich Video, wobei
- ein Sender (11) die Inhaltsdaten schafft,
- der Sender ein Übertragungssignal (13) erzeugt, das die Inhaltsdaten darstellt,
- das Übertragungssignal über einen Übertragungskanal einem Empfänger (12) zugeführt wird,
- der Empfänger das Übertragungssignal empfängt und die Inhaltsdaten erfasst, und
- der Empfänger die Inhaltsdaten aufbereitet,
**dadurch gekennzeichnet, dass**
- der Sender (11) ein Filtersignals (14) erzeugt, das ein Filter zum Anpassen des Videos darstellt, wobei das Filter unabhängig von dem Video ist,
- der Sender das Filtersignal (14) über den Übertragungskanal zu dem Empfänger (12) überträgt,
- der Empfänger (12) das das Filter darstellende Filtersignal (14) empfängt,
- der Empfänger (12) selektiert, ob die Inhaltsdaten mit oder ohne Verarbeitung durch das Filter erfasst werden sollen, und
- der Empfänger einen Filtervorgang an den Inhaltsdaten durchführt, wie durch das Filtersignal (14) definiert und die Inhaltsdaten oder die gefilterten Inhaltsdaten aufbereitet.

2. Verfahren nach Anspruch 1, wobei der Sender das Filter aus einer Anzahl bei einem Provider verfügbarer Kandidatfilter selektiert.

3. Sendende Anordnung zum Senden von Inhaltsdaten, einschließlich Video, zu einer empfangenden Anordnung, wobei die sendende Anordnung Folgendes umfasst:
- Eingangsmittel (15) aufweist zum Liefern der Inhaltsdaten, und
- Mittel (17) zum Erzeugen eines die Inhaltsdaten darstellenden Übertragungssignals für die empfangende Anordnung,
**dadurch gekennzeichnet, dass** die sendende Anordnung Folgendes umfasst:
- Mittel (18) zum Erzeugen eines Filtersignals (14), das ein Filter darstellt zur Anpassung des Inhaltsdatenfiltersignals, welches das Filter darstellt, wobei das Filter unabhängig von dem Video ist, und Mittel zum Übertragen des Filtersignals (14) zu der empfangenden Anordnung (12), wodurch die empfangende Anordnung in den Stand gesetzt wird, einen Filtervorgang an den Inhaltsdaten durchzuführen, wie durch das Filtersignal (14) definiert, wobei die empfangende Anordnung einen Selektor (36) aufweist zum Aufbereiten der Inhaltsdaten mit oder ohne Verarbeitung durch das Filter.

4. Sendende Anordnung nach Anspruch 3, wobei die sendende Anordnung Filtereingangsmittel (25) zum Erfassen eines Filters aus einer externen Quelle aufweist, insbesondere über ein Netzwerk oder aus einem Speichermedium.

5. Sendende Anordnung nach Anspruch 3, wobei die sendende Anordnung Mittel aufweist zum Übertragen des Übertragungssignals und des Filtersignals als eine kombinierte Nachricht.

6. Filtersignal, das ein Filter darstellt, zu Verwendung bei dem Verfahren nach Anspruch 1, wobei das Filtersignal (1) zum Einstellen eines Filtervorgangs in einer Fernverarbeitungseinheit zur etwaigen Filterung der Inhaltsdaten ist, einschließlich Video, und wobei das Filter unabhängig von dem Video ist.

7. Filtersignal nach Anspruch 6, wobei das Filtersignal (51) Parameter zum Filtern von Streaming Video aufweist, wobei der Filtervorgang nur von Frames des Videos bis an das nächste wiederzugebende Frame abhängig ist.

8. Filtersignals nach Anspruch 6, wobei das Filtersignals (51) Parameter zum Filtern von Non-Streaming Video aufweist, wobei der Filterprozess von vielen Frames in dem Video abhängig ist, einschließlich von Frames, die nach dem nächsten Frame wiedergegeben werden sollen.

9. Filtersignals nach Anspruch 6, wobei das Filtersignal (51) ein Farbfilter, und/oder ein Bildstrukturfilter, und/oder ein Überlagerungsfilter, und/oder ein Szenenausblendungsfilter aufweist.

10. Filtersignal nach Anspruch 6, wobei die Inhaltsdaten auch Audiodaten aufweisen und das Filtersignal (51) ein Audiofilter und/oder zusätzliches Audio enthält.

11. Aufzeichnungsträger (41), auf dem ein Filtersignal nach Anspruch 6, 7, 8, 9 oder 10 in einer Spur (42) vorgesehen ist, in der Informationsmuster das Filtersignal darstellen, wobei das Filter zur etwaigen Einstellen einer Fernbehandlungseinheit ist zum Filtern von Inhaltsdaten, einschließlich Video, und wobei das Filter unabhängig von dem Video ist.

12. Aufzeichnungsträger nach Anspruch 11, wobei der Aufzeichnungsträger ein Computerprogrammprodukt aufweist zum verarbeiten von Inhaltsinformation entsprechend dem Filtersignal.

13. Anordnung zum Empfangen von Inhaltsdaten, einschließlich Video, wobei diese Anordnung Folgendes aufweist:
- Mittel zum Empfangen eines Übertragungssignals,
- Mittel zum Erfassen der Inhaltsdaten aus dem Übertragungssignal, und
- Mittel zum Aufbereiten der Inhaltsdaten
**dadurch gekennzeichnet, dass**
die Anordnung weiterhin Folgendes umfasst:
- Mittel (20) zum Empfangen eines Filtersignals, das ein Filter darstellt zur Anpassung der Inhaltsdaten, wobei das Filter unabhängig von dem Video ist, und
- Verarbeitungsmittel (33) zum Durchführen eines Filtervorgangs an den Inhaltsdaten, wie von dem Filtersignals (14) definiert,
- Aufbereitungsmittel (34) zum Aufbereiten der genannten verarbeiteten Inhaltsdaten, und
- einen Selektor (36) zum Aufbereiten der Inhaltsdaten mit oder ohne Verarbeitung durch das Filter.

14. Anordnung nach Anspruch 13, wobei die Anordnung Filtereingangsmittel (35) aufweist zum Erfassen von Filterdaten aus einer externen Quelle, insbesondere über ein Netzwerk oder aus einem Speichermedium, wie durch einen Hinweis in dem Filtersignal angegeben.

## Revendications

1. Procédé de transfert de données de contenu, y compris la vidéo, dans lequel
un expéditeur (11) fournit les données de contenu,
l'expéditeur génère un signal de transmission (13) représentant les données de contenu,
le signal de transmission est transféré à un récepteur (12) par le biais d'un canal de transmission,
le récepteur reçoit le signal de transmission et récupère les données de contenu, et
le récepteur rend les données de contenu,
**caractérisé en ce que**
l'expéditeur (11) génère un signal de filtre (14) représentant un filtre pour adapter la vidéo, le filtre étant indépendant de la vidéo;
l'expéditeur transfère le signal de filtre (14) au récepteur (12) par le biais du canal de transmission,
le récepteur (12) reçoit le signal de filtre (14) représentant le filtre,
le récepteur (12) sélectionne si les données de contenu doivent être rendues avec ou sans traitement par le filtre; et
le récepteur exécute optionnellement une opération de filtre sur les données de contenu comme défini par le signal de filtre (14) et rend les données de contenu ou les données de contenu filtrées.

2. Procédé selon la revendication 1, dans lequel l'expéditeur sélectionne le filtre parmi un certain nombre de filtres candidats qui sont disponibles à l'endroit d'un fournisseur.

3. Dispositif d'émission pour émettre des données de contenu, y compris la vidéo, à un dispositif de réception; le dispositif d'émission comprend des moyens d'entrée (15) pour fournir les données de contenu, et
des moyens (17) pour transférer un signal de transmission au dispositif de réception représentant les données de contenu,
**caractérisé en ce que** le dispositif d'émission comprend
des moyens (18) pour générer un signal de filtre (14) représentant un filtre pour adapter le signal de filtre de données de contenu où le filtre est indépendant de la vidéo et pour transférer le signal de filtre (14) au dispositif de réception (12) en permettant que le dispositif de réception exécute une opération de filtre sur les données de contenu comme défini par le signal de filtre (14), le dispositif de réception comprenant un sélecteur (36) pour rendre les données de contenu étant ou n'étant pas traitées par le filtre.

4. Dispositif d'émission selon la revendication 3 dans laquelle le dispositif d'émission comprend des moyens d'entrée de filtre pour récupérer un filtre à partir d'une source externe, en particulier par le biais d'un réseau ou à partir d'un support de mémoire.

5. Dispositif d'émission selon la revendication 3 dans laquelle le dispositif d'émission comprend des moyens pour transmettre le signal de transmission et le signal de filtre en tant qu'un message combiné.

6. Signal de filtre représentant un filtre pour être utilisé dans le procédé de la revendication 1, le signal de filtre 51 étant destiné à régler une opération de filtrage dans une unité de télétraitement pour filtrer optionnellement les données de contenu, y compris la vidéo, et le filtre étant indépendant de la vidéo.

7. Signal de filtre selon la revendication 6 dans laquelle le signal de filtre (51) comprend des paramètres pour filtrer la vidéo coulante où l'opération de filtrage est seulement dépendante de trames de la vidéo jusqu'à une trame à afficher subséquemment.

8. Signal de filtre selon la revendication 6 dans laquelle le signal de filtre (51) comprend des paramètres pour filtrer la vidéo non coulante où le processus de filtrage est dépendant de trames multiples dans la vidéo, y compris des trames à afficher au-delà de la trame suivante.

9. Signal de filtre selon la revendication 6 dans laquelle le signal de filtre (51) comprend un filtre chromatique, et/ou un filtre de structure d'image, et/ou un filtre de recouvrement et/ou un filtre de fondu de scène.

10. Signal de filtre selon la revendication 6, dans lequel les données de contenu incluent également des données audio et le signal de filtre (51) comprend un filtre audio et/ou l'audio additionnelle.

11. Support d'enregistrement (41) sur lequel un signal de filtre selon la revendication précédente 6, 7, 8, 9 ou 10 est appliqué dans une piste (42) dans laquelle des configurations d'information représentent le signal de filtre, le filtre étant destiné à régler optionnellement une unité de télétraitement pour filtrer des données de contenu, y compris la vidéo, et le filtre étant indépendant de la vidéo.

12. Support d'enregistrement selon la revendication 11 dans laquelle le support d'enregistrement comprend un produit de programme informatique pour traiter l'information de contenu selon le signal de filtre.

13. Dispositif pour recevoir des données de contenu, y compris la vidéo, lequel dispositif comprend des moyens pour recevoir un signal de transmission,
des moyens pour récupérer les données de contenu à partir du signal de transmission, et
des moyens pour rendre les données de contenu,
**caractérisé en ce que**
le dispositif comprend des moyens (20) pour recevoir un signal de filtre représentant un filtre pour adapter les données de contenu, le filtre étant indépendant de la vidéo, et
des moyens de traitement (33) pour exécuter une opération de filtre sur les données de contenu comme défini par le signal de filtre (14);
des moyens de rendu (34) pour rendre lesdites données de contenu traitées; et
un sélecteur (36) pour rendre les données de contenu avec ou sans traitement par le filtre.

14. Dispositif selon la revendication 13 dans laquelle le dispositif comprend des moyens d'entrée de filtre (35) pour récupérer des données de filtre à partir d'une source externe, en particulier par le biais d'un réseau ou à partir d'un support de mémoire comme indiqué par une référence dans le signal de filtre.
